# FASCICULE DE BREVET EUROPEEN

(11) **EP 1 890 121 B1**
(45) Date de publication et mention de la délivrance du brevet: **28.11.2018**
(21) Numéro de dépôt: 07114074.3
(22) Date de dépôt: 09.08.2007
(51) Int. Cl.: G01J 3/46, G01N 21/29

(54) **ÉVALUATION QUANTITATIVE D'UN FILTRE COLORÉ**
QUANTITATIVE BEURTEILUNG EINES FARBFILTERS
QUANTITATIVE EVALUATION OF A COLOUR FILTER

(30) Priorité: 16.08.2006 FR 0607323
(43) Date de publication de la demande: 20.02.2008
(73) Titulaire: Essilor International, 94220 Charenton-le-Pont (FR); CENTRE NATIONAL DE LA RECHERCHE SCIENTIFIQUE -CNRS-, 75794 Paris Cedex 16 (FR)
(72) Inventeur: Baillet, Gilles, 94220, CHARENTON-LE-PONT (FR); Bourdoncle, Bernard, 94220, CHARENTON-LE-PONT (FR); Harrar, Margalith, 94220, CHARENTON-LE-PONT (FR); Vienot, Françoise, 75005, PARIS (FR)
(74) Mandataire: Cabinet Plasseraud

(56) Documents cités:
- EP-A2- 1 273 894
- JP-A- 2001 297 323

## Description

La présente invention concerne un procédé d'évaluation quantitative d'un filtre coloré. Elle peut être appliquée, en particulier, pour évaluer une restitution de teintes par un verre ophtalmique teinté.

Des filtres colorés sont utilisés dans de nombreuses applications, par exemple pour atténuer une intensité lumineuse trop importante ou pour augmenter un contraste d'image. En particulier, des verres ophtalmiques teintés, notamment des verres de protection solaire, sont des filtres colorés qui sont destinés à être assemblés dans une monture de lunettes.

Théoriquement, un filtre peut présenter un spectre de transmission sensiblement plat dans l'intervalle de lumière visible 380 nm - 780 nm (nanomètre). Il ne devrait alors pas modifier la perception de teintes d'échantillons de référence, entre une observation de ces échantillons à travers le filtre et une observation directe des mêmes échantillons, c'est-à-dire sans le filtre. Mais un tel filtre à spectre plat n'est pas réalisable dans la pratique, notamment à cause de limitations spectrales des colorants qui sont utilisés pour fabriquer des filtres. De plus, son apparence grise serait peu esthétique et peu appréciée pour les applications ophtalmiques.

Les spectres de transmission dans l'intervalle de lumière visible des filtres qui sont utilisés dans la pratique présentent donc des variations. Ils sont alors susceptibles de modifier la perception des teintes par un observateur, entre une observation directe d'échantillons de ces teintes et une observation de ceux-ci à travers le filtre. Pour cette raison, ils sont appelés filtres colorés.

Il est alors nécessaire d'évaluer quantitativement la restitution des teintes par un filtre coloré, notamment afin de discriminer des filtres qui modifieraient d'une façon trop importante, voire gênante, la perception des teintes. Un tel besoin existe tout particulièrement pour les verres ophtalmiques de protection solaire, qui sont utilisés à l'extérieur, c'est-à-dire dans des conditions où un rendu naturel est souhaité pour un nombre élevé de teintes présentes dans notre environnement.

Le document EP 1,273,894 propose un procédé d'évaluation de couleurs de filtres, qui est basé sur le calcul d'écarts chromatiques exprimés dans l'espace CIELAB, repéré par les axes L*, a*, b* et défini par la Commission Internationale de l'Eclairage. L'intervention d'observateurs n'est alors plus nécessaire, pour évaluer visuellement des échantillons de teintes vus à travers les filtres. Mais le mode d'évaluation de la modification des teintes par chaque filtre qui est décrit dans ce document rend mal compte de l'impression, pour un observateur humain, d'un rendu des teintes qui soit naturel. Le document JP2001 297323 divulgue un autre procédé d'évaluation de couleurs de filtres.

Un but de la présente invention consiste donc à proposer une évaluation quantitative d'un filtre coloré, qui ne présente pas les inconvénients cités ci-dessus.

Pour cela, l'invention propose un procédé selon la revendication 1.

Un tel procédé d'évaluation d'un filtre coloré est économique et rapide à mettre en oeuvre, notamment parce qu'il ne nécessite pas de recourir à des observateurs réels. Il ne requiert que des moyens de mesures spectrophotométriques et des moyens de calculs qui sont simples et couramment disponibles.

Une caractéristique importante de l'invention est l'utilisation, à l'étape /3/, d'un modèle numérique d'apparence des teintes. Un tel modèle permet de prendre en compte des phénomènes physiologiques et subjectifs qui interviennent dans la perception visuelle des teintes par un être humain. Des variations de sensibilité de l'oeil humain en fonction de la teinte elle-même ou d'autres paramètres environnementaux sont ainsi prises en compte, ainsi que des différences d'appréciation des teintes qui peuvent résulter de facteurs psychologiques. L'évaluation quantitative qui est obtenue selon l'invention, pour caractériser la restitution de la teinte de l'échantillon par le filtre coloré, correspond par conséquent à une évaluation réelle, telle qu'elle serait effectuée par un observateur humain.

Selon un mode de mise en oeuvre préféré de l'invention, le modèle numérique d'apparence colorée («color appearance model» en anglais) qui est utilisé à l'étape /3/, peut être le modèle CIECAM02 («Colour Appearance Model for Colour Management Systems»), défini en 2002 par la Commission Internationale de l'Eclairage dans les publications ISBN 3 901 906 290 et CIE 159 : 2004. Les inventeurs ont alors vérifié que les évaluations de filtres colorés qui sont effectuées en utilisant un procédé selon l'invention correspondent dans une mesure satisfaisante à des évaluations effectuées par un ensemble d'observateurs humains.

Selon un perfectionnement de l'invention, les étapes /2/ à /4/ peuvent être répétées pour plusieurs échantillons de teintes de référence, de façon à obtenir des écarts respectifs d'attribut perceptif pour ces échantillons de teintes. Le procédé comprend alors l'étape supplémentaire suivante :
/5/ calculer une valeur caractérisant la restitution globale des teintes par le filtre coloré, à partir de l'ensemble des écarts d'attribut perceptif qui sont obtenus respectivement pour les échantillons de teintes utilisés.

L'évaluation de la restitution des teintes par le filtre coloré qui est alors obtenue est basée sur plusieurs teintes. Elle permet donc d'évaluer le filtre d'une façon globale en tenant compte de conditions d'utilisations variées, c'est-à-dire pour une multiplicité de teintes qui sont perçues à travers le filtre.

En particulier, les échantillons de teintes de référence peuvent être sélectionnés parmi ceux qui sont référencés dans le système NCS («Natural Colour System», voir NCS Atlas 1950 Original). Notamment, les inventeurs ont montré que des évaluations d'un filtre coloré quelconque qui sont effectuées à partir de séries différentes d'échantillons de teintes NCS aboutissent à des résultats quantitatifs équivalents, alors que ces séries sont différenciées par des valeurs de clarté et de saturation des teintes. Autrement dit, une évaluation de filtre qui est réalisée selon l'invention rend correctement compte du fait que la modification d'une teinte par un filtre coloré dépend peu de la clarté et de la saturation de cette teinte.

L'invention propose aussi d'utiliser un procédé d'évaluation tel que décrit précédemment pour évaluer quantitativement la restitution de teintes par un verre ophtalmique teinté. Dans ce cas, le perfectionnement du procédé qui consiste à utiliser plusieurs échantillons de teintes pour évaluer la restitution globale des teintes par le verre ophtalmique est particulièrement avantageux. En effet, le verre ophtalmique peut être utilisé par un porteur de celui-ci dans des conditions très variées, qui dépendent de son environnement lumineux ainsi que des objets qu'il observe.

L'invention propose encore un procédé de classement de filtres colorés, suivant lequel plusieurs filtres sont successivement évalués en utilisant un procédé d'évaluation tel que décrit plus haut. Les filtres peuvent alors être classés en fonction des résultats quantitatifs d'évaluation qui sont obtenus respectivement pour chacun d'eux. Un tel procédé de classement est particulièrement utile lorsque plusieurs filtres ont été fabriqués, qui présentent des rendus de teintes différents, et que l'un d'entre eux doit être sélectionné comme modèle pour une production de masse. Le procédé de classement selon l'invention permet d'éviter que des observateurs réels effectuent des tests comparatifs de chacun des filtres. Un gain de temps important est ainsi obtenu lors de la conception du produit.

En particulier, un tel procédé de classement peut être utilisé pour classer des verres ophtalmiques teintés, tels que des verres de protection solaire. En effet, la sélection d'un verre teinté en fonction de sa capacité à restituer les teintes est une étape particulièrement importante pour l'application ophtalmique.

D'autres particularités et avantages de la présente invention apparaîtront dans la description ci-après d'un exemple de mise en oeuvre non limitatif, en référence aux dessins annexés, dans lesquels :
- la figure 1 est un diagramme synoptique des étapes d'un procédé selon l'invention, pour l'évaluation d'un filtre coloré ;
- les figures 2a et 2b illustrent des conditions d'observation qui sont considérées pour évaluer un filtre coloré conformément à l'invention ;
- la figure 3 est une comparaison de deux diagrammes de valeurs d'écart d'attribut perceptif obtenues pour un filtre coloré et pour une série d'échantillons de teintes de référence, respectivement en utilisant un procédé d'évaluation selon l'invention et en utilisant un ensemble d'observateurs humains ; et
- la figure 4 illustre les résultats d'évaluation de plusieurs filtres colorés obtenus en utilisant un procédé selon l'invention.

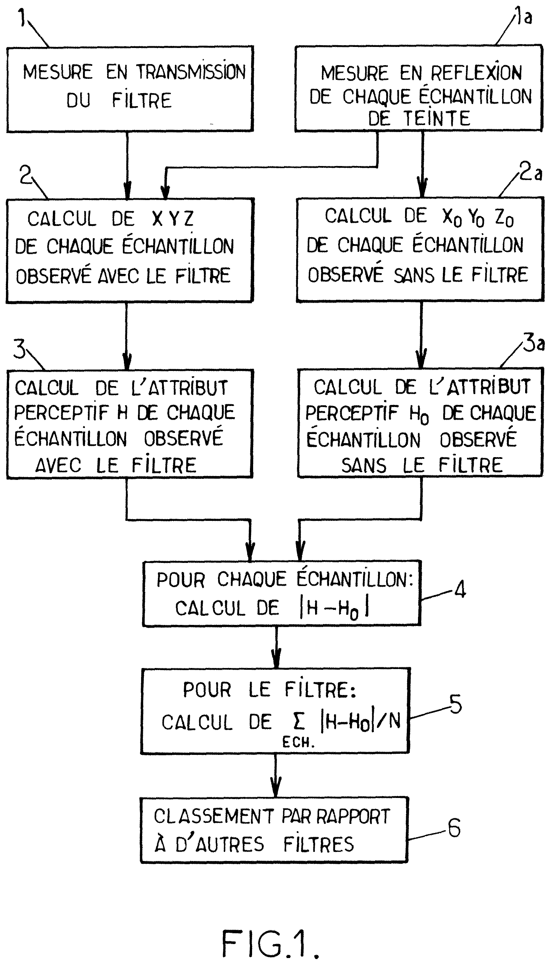

Une évaluation d'un filtre coloré conformément à l'invention est maintenant décrite, en référence à la figure 1.

Lors d'une première étape référencée 1 sur la figure 1, un filtre coloré est caractérisé en transmission à l'aide d'un spectrophotomètre, qui peut être d'un type usuel disponible commercialement. Un spectre de transmission du filtre est ainsi obtenu, qui regroupe des valeurs de transmission mesurées pour des longueurs d'onde réparties dans un intervalle de lumière visible. Par exemple, la transmission du filtre peut être mesurée sur l'intervalle de longueur d'onde 400 nm - 7/0 nm avec un pas de 1 nm.

Des échantillons de teintes sont par ailleurs caractérisés spectralement en réflexion. De tels échantillons sont constitués de supports opaques colorés uniformément sur une face. Préférentiellement, des échantillons de teintes normalisés peuvent être utilisés, tels que ceux qui sont fixés par le système NCS. Ceux-ci sont répartis en séries de 40 échantillons, chaque série correspondant à une variation de la teinte («hue» en anglais) des échantillons, et les séries étant différenciées entre elles par des valeurs de saturation («chromativeness» en anglais) et de clarté («brightness» ou encore «1-blackness»). Les échantillons de teintes d'une même série peuvent être utilisés pour évaluer le filtre coloré. Un spectre de réflexion de chacun de ces échantillons est alors obtenu sur l'intervalle de longueur d'onde de lumière visible 400 nm - 700 nm (étape 1a de la figure 1). De préférence, le spectre de réflexion de chaque échantillon de teinte est un spectre de réflexion non spéculaire, qui correspond mieux à des conditions réelles d'observation, par rapport à un spectre de réflexion spéculaire. Autrement dit, les spectres de réflexion des échantillons de teintes correspondent à des valeurs d'angles d'incidence et de réflexion de la lumière qui sont différentes de celles définies par les conditions de réflexion de Bragg.

Pour chaque échantillon de teinte utilisé, les valeurs spectrales de réflexion de l'échantillon sont combinées avec celles de transmission du filtre et avec des caractéristiques spectrales d'une source lumineuse d'éclairement (étape 2 de la figure 1). Des données optiques sont ainsi obtenues, qui caractérisent l'échantillon de teinte lorsqu'il est éclairé par la source lumineuse et observé simultanément à travers le filtre. En particulier, les caractéristiques spectrales qui sont utilisées pour la source lumineuse, aussi appelée illuminant, peuvent correspondre aux conditions d'éclairement «SoLux® Daylight», source de lumière telle que décrite dans le brevet US 5,418,419. Dans le mode de mise en oeuvre de l'invention qui est décrit ici, les données optiques qui sont obtenues sont les composantes trichromatiques X, Y, Z relatives à la simulation de l'observation de l'échantillon de teinte à travers le filtre. Les composantes X, Y, Z sont calculées d'une façon qui est connue de l'Homme du métier, en utilisant des moyens de calculs simples tels d'un ordinateur personnel. Il est entendu que dans des modes de mise en oeuvre alternatifs de l'invention, d'autres données optiques peuvent être utilisées d'une façon équivalente. Ces données optiques peuvent être obtenues par calcul ou par toute méthode expérimentale alternative, telle que l'utilisation d'un photomètre colorimétrique pour mesurer directement les composants X, Y, Z par exemple.

Lors de l'étape 3, les composantes X, Y, Z qui correspondent à la simulation de l'observation de chaque échantillon de teinte à travers le filtre, sont introduites dans un modèle numérique d'apparence colorée. Les inventeurs ont validé expérimentalement que le modèle numérique CIECAM02 correspond de façon satisfaisante à une perception visuelle humaine moyenne. Pour cette raison, l'utilisation de ce modèle est préférée par les inventeurs. Ce modèle numérique, qui peut être mis en oeuvre sur un ordinateur personnel usuel, produit des valeurs d'attributs perceptifs visuels qui caractérisent la perception de chaque teinte introduite en entrée par ses données optiques. Il prend en compte, lors de la simulation de la perception de chaque teinte, des conditions réelles d'observation. En particulier, il est considéré que l'échantillon de teinte est observé à l'intérieur d'une cabine aux parois blanches et diffusantes. Dans le mode de mise en oeuvre de l'invention qui est décrit ici, la valeur d'attribut perceptif qui est utilisée est celle de l'angle de teinte H qui peut être repéré dans le système NCS. Elle varie selon un cercle entre 0° et 360°, les valeurs 0°, 90°, 180° et 270° correspondant respectivement aux couleurs rouge, jaune verte et bleue, et la teinte variant continûment entre ces couleurs pour des valeurs intermédiaires de H. L'angle de teinte H est donc particulièrement approprié pour distinguer les échantillons à l'intérieur de la série NCS utilisée.

Parallèlement, des données optiques relatives à chaque échantillon de teinte sont calculées, qui correspondent à cet échantillon lorsqu'il est observé directement, c'est-à-dire sans interposition du filtre coloré, en utilisant la même source lumineuse d'éclairement que précédemment. Des composantes trichromatiques X₀, Y₀, Z₀ sont ainsi calculées pour chaque échantillon de teinte utilisé (étape 2a). Elles sont ensuite introduites dans le modèle CIECAM02 pour obtenir une valeur H₀ d'angle de teinte qui caractérise la perception visuelle de l'échantillon (étape 3a). Etant donné que les étapes 1a, 2a et 3a concernent les échantillons de teintes indépendamment du filtre coloré qui est en cours d'évaluation, elles peuvent être exécutées préalablement et les valeurs qui sont obtenues sont reprises pour évaluer successivement plusieurs filtres.

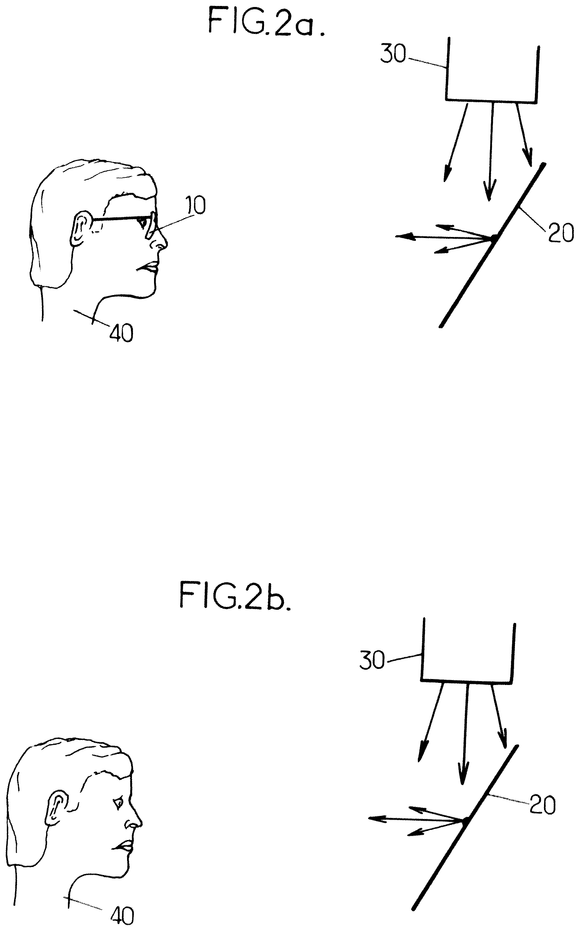

Les figures 2a et 2b illustrent les conditions d'observation qui correspondent respectivement aux valeurs H et H₀ pour chaque échantillon de teinte. L'échantillon de teinte 20 est éclairé par la source lumineuse 30, qui possède un spectre d'émission correspondant à l'illuminant utilisé pour le calcul des composantes X, Y, Z. La valeur H, telle qu'elle résulte des étapes 2 et 3, correspond au cas où l'échantillon 20 est regardé par l'observateur 40 à travers le filtre coloré 10, le filtre 10 étant disposé entre l'échantillon 20 et l'oeil de l'observateur 40. A titre d'illustration, la figure 2a illustre un cas où le filtre coloré 10 est un verre ophtalmique teinté, notamment un verre de lunettes de protection solaire. Mais le filtre 10 peut être aussi, d'une façon équivalente, une visière teintée de casque, un verre de masque de protection, un filtre d'appareil de mesure optique ou de visée, etc. La figure 2b illustre les conditions d'observation qui correspondent à la valeur H₀. Elles sont identiques à celles de la figure 2a, en supprimant le filtre 10.

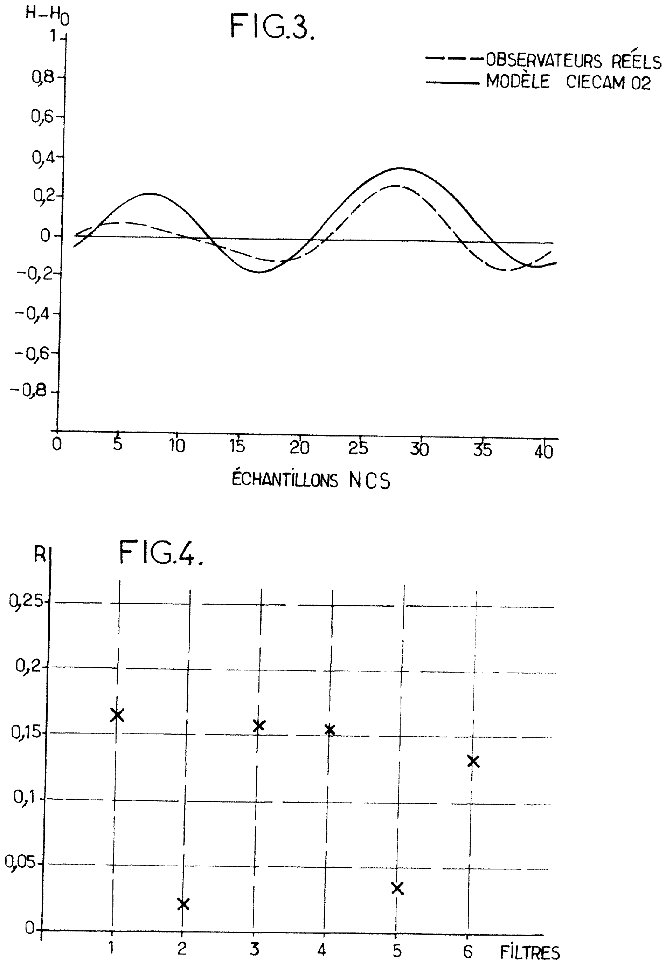

De retour à la figure 1, lors de l'étape 4, une différence est calculée pour chaque échantillon de teinte, entre la valeur d'angle de teinte H qui correspond à cet échantillon lorsqu'il est observé à travers le filtre et la valeur H₀ qui correspond au même échantillon observé sans le filtre. La figure 3 est un diagramme qui regroupe les valeurs de différence H-H₀ obtenues pour les 40 échantillons de teintes d'une série NCS utilisée (courbe en trait plein). Les échantillons sont repérés en abscisse par une numérotation de ceux-ci dans la série NCS, et les différences H-H₀ correspondantes sont repérées en ordonnée. Un tel diagramme fournit une représentation de la modification de la perception des teintes qui est causée par le filtre coloré. Dans ce diagramme, une courbe proche de l'axe d'abscisse indique que le filtre procure une perception naturelle des teintes, avec une altération très réduite de celles-ci. Des parties de courbe qui ont des valeurs positives d'ordonnée correspondent à des teintes qui sont perçues de façon décalée en tournant dans le sens horaire sur le cercle NCS. A l'inverse, des parties de courbe à valeurs négatives d'ordonnée correspondent à des teintes qui sont perçues de façon décalée en tournant dans le sens trigonométrique sur le cercle NCS.

Pour chaque échantillon de teinte, la valeur absolue de la différence H-H₀, notée |H-H₀|, constitue une évaluation de la restitution de la teinte de cet échantillon par le filtre. Une faible valeur de |H-H₀|, typiquement inférieure à 0,1, indique que le filtre coloré modifie peu la perception de la teinte de l'échantillon, et une valeur élevée (supérieure à 0,1 notamment) indique une modification importante.

La restitution par le filtre de la teinte de chaque échantillon a aussi été évaluée par un ensemble d'observateurs humains. Quinze observations réelles ont été réalisées pour chaque échantillon, sans et avec le filtre coloré interposé entre l'observateur et l'échantillon de teinte. La luminance de fond utilisée pour ces observations est 1500 cd/m² (candela par mètre-carré). Dans chaque cas et pour chaque échantillon de teinte, une moyenne des résultats de quinze évaluations effectuées par les observateurs a été calculée puis reportée sur la figure 3 (courbe en pointillés). La similitude des variations respectives des deux courbes de la figure 3 constitue une validation du modèle d'apparence de teintes CIECAM02 pour rendre compte de la perception par l'oeil humain de variations de teintes.

La restitution globale des teintes par le filtre peut être évaluée en calculant une moyenne des valeurs absolues des écarts d'attribut perceptif qui sont obtenus respectivement pour les échantillons de teintes (étape 5). Ainsi, le résultat de l'évaluation du filtre, noté R, est égal à ∑_{{échantillons}}|H-H₀|/N, où N est le nombre d'échantillons de teintes qui ont été utilisés pour évaluer le filtre. Par exemple, N peut être égal à 40 lorsqu'une série complète d'échantillons de teinte NCS a été utilisée. D'autres formules équivalentes peuvent être adoptées alternativement pour le résultat d'évaluation R.

Lorsque plusieurs filtres ont chacun été évalués de la façon qui a été décrite précédemment, de façon à obtenir des résultats d'évaluation R respectifs pour ceux-ci, il est possible de classer ces filtres par ordre croissant des résultats R. Les filtres qui apparaissent en premier dans ce classement restituent les teintes de façon plus naturelle, alors que ceux de la fin du classement altèrent plus la perception des teintes. La figure 4 reproduit un diagramme dans lequel sont reportés les résultats R pour 6 filtres, référencés 1 à 6, qui ont été évalués selon le procédé de l'invention. Les filtres 2 et 5, pour lesquels R est sensiblement égal à 0,020 et 0,035 respectivement, procurent un rendu de teintes en général plus naturel que les filtres 1, 3, 4 et 6, pour lesquels les valeurs de R sont de l'ordre de 0,15.

En outre, pour chacun des filtres 1 à 6, plusieurs résultats R ont été calculés en utilisant le même procédé d'évaluation, mais en variant la série d'échantillons de teintes NCS qui est utilisée pour chaque évaluation. Les inventeurs ont alors constaté que les résultats R qui sont ainsi obtenus varient peu. Autrement dit, l'évaluation de la restitution globale des teintes par un filtre ne dépend que faiblement de la clarté et de la saturation de ces teintes. En particulier, le classement des filtres n'est modifié éventuellement en variant la série d'échantillons NCS utilisée que si deux filtres sont sensiblement équivalents quant à leurs capacités respectives à restituer les teintes. Cette vérification constitue une validation pour limiter à une unique série NCS les échantillons des teintes qui sont utilisés pour évaluer un filtre coloré conformément à l'invention.

## Revendications

1. Procédé d'évaluation quantitative d'un filtre coloré (10), comprenant les étapes suivantes :
/1/ mesurer un spectre de transmission du filtre (10) sur un intervalle de lumière visible à l'aide d'un spectrophotomètre ;
/2/ obtenir, à partir du spectre de transmission du filtre (10) et d'un spectre de réflexion d'un échantillon de teinte de référence (20), des données optiques relatives à une simulation d'une observation de l'échantillon de teinte à travers le filtre ;
/3/ introduire, dans un modèle numérique d'apparence colorée, les données optiques relatives à la simulation de l'observation de l'échantillon de teinte (20) à travers le filtre (10), de façon à obtenir, pour ledit échantillon, une valeur d'au moins un attribut perceptif visuel ; et
/4/ calculer un écart entre la valeur de l'attribut perceptif obtenue pour la simulation de l'observation de l'échantillon de teinte (20) à travers le filtre (10) et une valeur dudit attribut perceptif pour une observation du même échantillon sans le filtre,
ledit écart formant une évaluation de la restitution de la teinte de l'échantillon de référence par le filtre coloré,
ledit modèle numérique d'apparence colorée prenant en compte des phénomènes physiologiques et subjectifs qui interviennent dans la perception visuelle des teintes par un être humain, y compris des variations de sensibilité de l'oeil humain en fonction de la teinte ou de paramètres environnementaux, et des différences d'appréciation des teintes qui résultent de facteurs psychologiques.

2. Procédé selon la revendication 1, suivant lequel les étapes /2/ à /4/ sont répétées pour plusieurs échantillons de teintes de référence de façon à obtenir des écarts respectifs d'attribut perceptif pour lesdits échantillons de teintes, et suivant lequel le procédé comprend en outre l'étape suivante :
/5/ calculer une valeur caractérisant la restitution globale des teintes par le filtre coloré à partir de l'ensemble des écarts d'attribut perceptif obtenus respectivement pour les échantillons de teintes utilisés.

3. Procédé selon la revendication 2, suivant lequel la valeur caractérisant la restitution globale des teintes par le filtre calculée à l'étape /5/ est égale à une moyenne de valeurs absolues des écarts d'attribut perceptif obtenus respectivement pour les échantillons de teintes utilisés.

4. Procédé selon l'une quelconque des revendications précédentes, suivant lequel les données optiques obtenues à l'étape /2/ sont des composantes trichromatiques relatives à la simulation de l'observation de l'échantillon de teinte à travers le filtre.

5. Procédé selon l'une quelconque des revendications précédentes, suivant lequel le modèle numérique d'apparence de teintes utilisé à l'étape /3/ est le modèle CIECAM02.

6. Procédé selon l'une quelconque des revendications précédentes, suivant lequel la valeur d'attribut perceptif visuel obtenue à l'étape /3/ est une valeur d'angle de teinte H qui peut être repérée dans le système NCS.

7. Procédé selon l'une quelconque des revendications précédentes, suivant lequel le spectre de réflexion de l'échantillon de teinte utilisé à l'étape /2/ est un spectre de réflexion non spéculaire.

8. Procédé selon l'une quelconque des revendications précédentes, suivant lequel les données optiques obtenues à l'étape /2/ correspondent aux conditions d'éclairement «SoLux Daylight».

9. Utilisation d'un procédé d'évaluation selon l'une quelconque des revendications 1 à 8, pour évaluer quantitativement une restitution de teinte par un verre ophtalmique teinté.

10. Procédé de classement de filtres colorés, suivant lequel plusieurs filtres colorés sont successivement évalués en utilisant un procédé d'évaluation selon l'une quelconque des revendications 1 à 8, et suivant lequel lesdits filtres sont classés en fonction des résultats d'évaluation obtenus respectivement pour lesdits filtres.

11. Utilisation d'un procédé de classement selon la revendication 10, pour classer des verres ophtalmiques teintés.

## Patentansprüche

1. Verfahren für die quantitative Bewertung eines Farbfilters (10), das die folgenden Schritte umfasst:
/1/ Messen eines Durchlassspektrums des Filters (10) in einem Intervall des sichtbaren Lichts mit Hilfe eines Spektrophotometers;
/2/ Erhalten anhand des Durchlassspektrums des Filters (10) und eines Reflexionsspektrums einer Referenzfarbton-Probe (20) von optischen Daten in Bezug auf eine Simulation einer Beobachtung der Farbtonprobe durch den Filter;
/3/ Einbringen der optischen Daten bezüglich der Simulation der Beobachtung der Farbtonprobe (20) durch den Filter (10) in ein digitales Farberscheinungsmodell, derart, dass für die Probe ein Wert wenigstens eines wahrnehmbaren visuellen Attributs erhalten wird; und
/4/ Berechnen eines Abstands zwischen dem Wert des für die Simulation der Beobachtung der Farbtonprobe (20) durch den Filter (10) erhaltenen wahrnehmbaren Attributs und einem Wert des wahrnehmbaren Attributs für eine Beobachtung derselben Probe ohne den Filter,
wobei der Abstand eine Bewertung der Wiederherstellung des Farbtons der Referenzprobe durch den Farbfilter bildet,
wobei das digitale Farberscheinungsmodell physiologische und subjektive Phänomene berücksichtigt, die in die visuelle Wahrnehmung von Farbtönen durch ein menschliches Wesen eingehen, einschließlich Veränderungen der Empfindlichkeit des menschlichen Auges als Funktion des Farbtons oder Umgebungsparametern und einschließlich unterschiedlicher Wahrnehmungen von Farbtönen, die aus physiologischen Faktoren resultieren.

2. Verfahren nach Anspruch 1, wobei die Schritte /2/ bis /4/ für mehrere Referenzfarbton-Proben wiederholt werden, derart, dass jeweilige Abstände des wahrnehmbaren Attributs für die Farbtonproben erhalten werden, wobei das Verfahren außerdem den folgenden Schritt umfasst:
/5/ Berechnen eines Werts, der die globale Wiederherstellung von Farbtönen durch den Farbfilter anhand der Gesamtheit von Abständen des wahrnehmbaren Attributs, die für die verwendeten Farbtonproben jeweils erhalten werden, charakterisiert.

3. Verfahren nach Anspruch 2, wobei der Wert, der die globale Wiederherstellung von Farbtönen durch den Filter, die im Schritt /5/ berechnet wird, gleich einem Mittelwert von Absolutwerten der Abstände des wahrnehmbaren Attributs ist, die für die jeweiligen verwendeten Farbtonproben erhalten werden.

4. Verfahren nach einem der vorhergehenden Ansprüche, wobei die im Schritt /2/ erhaltenen optischen Daten trichromatische Komponenten bezüglich der Simulation der Beobachtung der Farbtonprobe durch den Filter sind.

5. Verfahren nach einem der vorhergehenden Ansprüche, wobei das digitale Farbtonerscheinungsmodell, das im Schritt /3/ verwendet wird, das Modell CIECAM02 ist.

6. Verfahren nach einem der vorhergehenden Ansprüche, wobei der Wert des wahrnehmbaren visuellen Attributs, der im Schritt /3/ erhalten wird, ein Wert des Farbtonwinkels H ist, der in dem NCS-System verortet werden kann.

7. Verfahren nach einem der vorhergehenden Ansprüche, wobei das Reflexionsspektrum der Farbtonprobe, das im Schritt /2/ verwendet wird, ein Reflexionsspektrum ohne Spiegel ist.

8. Verfahren nach einem der vorhergehenden Ansprüche, wobei die optischen Daten, die im Schritt /2/ erhalten werden, den Beleuchtungsbedingungen "SoLux Daylight" entsprechen.

9. Verwendung eines Bewertungsverfahrens nach einem der Ansprüche 1 bis 8, um eine Wiederherstellung eines Farbtons durch ein getöntes Augenglas quantitativ zu bewerten.

10. Verfahren zum Klassifizieren von Farbfiltern, wobei mehrere Farbfilter nacheinander bewertet werden, indem ein Bewertungsverfahren nach einem der Ansprüche 1 bis 8 verwendet wird und wobei die Filter als Funktion der Bewertungsergebnisse, die für die jeweiligen Filter erhalten werden, klassifiziert werden.

11. Verwendung eines Klassifizierungsverfahrens nach Anspruch 10, um getönte Augengläser zu klassifizieren.

## Claims

1. Method for quantitatively evaluating a colour filter (10), comprising the following steps:
/1/ measuring a transmission spectrum of the filter (10) in a visible-light interval using a spectrophotometer;
/2/ obtaining, from the transmission spectrum of the filter (10) and from a reflection spectrum of a reference colour sample (20), optical data relating to a simulation of an observation of the colour sample through the filter;
/3/ introducing, into a numerical colour-appearance model, the optical data relating to the simulation of the observation of the colour sample (20) through the filter (10), so as to obtain, for said sample, a value of at least one visual perceptive attribute; and
/4/ calculating a difference between the perceptive-attribute value obtained for the simulation of the observation of the colour sample (20) through the filter (10) and a value of said perceptive attribute for an observation of the same sample without the filter,
said difference forming an evaluation of the rendering of the colour of the reference sample by the colour filter,
said numerical colour-appearance model taking into account subjective and physiological effects that are involved in the visual perception of colours by a human being, these including variations in the sensitivity of the human eye as a function of colour or environmental parameters, and differences in the appreciation of colours that result from psychological factors.

2. Method according to Claim 1, wherein steps /2/ to /4/ are repeated for a plurality of reference colour samples so as to obtain respective perceptive-attribute differences for said colour samples, and wherein the method furthermore comprises the following step:
/5/ calculating a value characterizing the overall colour rendering by the colour filter from all of the perceptive-attribute differences respectively obtained for the used colour samples.

3. Method according to Claim 2, wherein the value characterizing the overall colour rendering by the filter that is calculated in step /5/ is equal to an average of the absolute values of the perceptive-attribute differences respectively obtained for the used colour samples.

4. Method according to any one of the preceding claims, wherein the optical data obtained in step /2/ are trichromatic components relating to the simulation of the observation of the colour sample through the filter.

5. Method according to any one of the preceding claims, wherein the numerical colour-appearance model used in step /3/ is the CIECAM02 model.

6. Method according to any one of the preceding claims, wherein the visual-perceptive-attribute value obtained in step /3/ is a value of hue angle H, which may be measured in the NCS system.

7. Method according to any one of the preceding claims, wherein the reflection spectrum of the colour sample used in step /2/ is a non-specular reflection spectrum.

8. Method according to any one of the preceding claims, wherein the optical data obtained in step /2/ correspond to "SoLux Daylight" lighting conditions.

9. Use of an evaluating method according to any one of Claims 1 to 8, to quantitatively evaluate a colour rendering by a tinted ophthalmic lens.

10. Method for classifying colour filters, wherein a plurality of colour filters are evaluated in succession using an evaluating method according to any one of Claims 1 to 8, and wherein said filters are classified depending on the evaluation results respectively obtained for said filters.

11. Use of a classifying method according to Claim 10, to classify tinted ophthalmic lenses.
